# EUROPEAN PATENT APPLICATION

(11) **EP 4 797 087 A1**
(43) Date of publication of application: **26.08.2026**
(21) Application number: 24879011.5
(22) Date of filing: 16.10.2024
(51) Int. Cl.: G06F 9/445

(54) **CONFIGURATION METHOD AND APPARATUS**

(30) Priority: 16.10.2023 CN 202311337230
(71) Applicant: Yinwang Intelligent Technologies Co., Ltd., Shenzhen, Guangdong 518110 (CN)
(72) Inventor: LIU, Peifeng, Shenzhen, Guangdong 518110 (CN); WU, Wentao, Shenzhen, Guangdong 518110 (CN)
(74) Representative: MERH-IP Matias Erny Reichl Hoffmann Patentanwälte PartG mbB
(86) International application number: PCT/CN2024/125107
(87) International publication number: WO 2025/082369

(57) **Abstract**

This application provides a configuration method and apparatus, and may be applied to the field of intelligent vehicles. The method includes: obtaining an operating system object configuration file of an application and service code of the application; converting the operating system object configuration file of the application to obtain operating system object configuration code; compiling the operating system object configuration code and the service code of the application to obtain a static library of the application; and linking the static library of the application and a static library of an operating system kernel to obtain an executable file. Embodiments of this application may be applied to a development process of an intelligent vehicle or an electric vehicle, and a plurality of vendors do not need to combine operating system object configuration files. This helps improve efficiency of a developer and reduce human communication and time costs during development.

## Description

This application claims priority to Chinese Patent Application No. 202311337230.2, filed with the China National Intellectual Property Administration on October 16, 2023 and entitled "CONFIGURATION METHOD AND APPARATUS", which is incorporated herein by reference in its entirety.

### TECHNICAL FIELD

This application relates to the field of intelligent vehicles, and more specifically, to a configuration method and apparatus.

### BACKGROUND

Currently, an automotive electronic network is developing towards multi-bus hybrid network interconnection. In 2003, to avoid compatibility issues between major manufacturers, an open and standardized automotive embedded system software architecture (automotive open system architecture, AUTOSAR) specification was introduced in the automotive industry. Automotive manufacturers may develop their own software based on this standard.

In a development process of a traditional automobile embedded system software architecture (classic AUTOSAR, CP), a plurality of vendors need to combine operating system (operating system, OS) object configuration files for a plurality of times, generate unified OS dynamic configuration code in a kernel, and compile source code at the same time. This brings a lot of human communication and time costs.

### SUMMARY

This application provides a configuration method and apparatus. A plurality of OS object configuration files provided by a plurality of vendors do not need to be combined. This helps improve efficiency of a developer and reduce human communication and time costs during development.

According to a first aspect, a configuration method is provided. The method includes: obtaining an operating system OS object configuration file of a first application and service code of the first application; converting the OS object configuration file of the first application to obtain first OS object configuration code; compiling the first OS object configuration code and the service code of the first application to obtain a static library of the first application; and linking the static library of the first application and a static library of an OS kernel to obtain an executable file.

Based on the foregoing technical solution, an OS object configuration file of an application is converted to obtain OS object configuration code, and the OS object configuration code and service code of the application are compiled to obtain a static library of the application. In this way, a final executable file needs to be obtained only by using an OS object configuration file provided by each vendor and service code, and there is no need to combine OS object configuration files provided by a plurality of vendors. This helps improve efficiency of a developer and reduce human communication and time costs during development.

In this embodiment of this application, the OS object configuration file used by the application is separated from the OS kernel, the OS kernel is separately released as a component, and the OS object configuration file used for configuration of the application is separately released in combination with the service code. This can resolve a problem of parallel development of an AUTOSAR CP. Modules are decoupled, and each component may separately release a binary component.

In some possible implementations, converting the OS object configuration file of the first application includes: converting the OS object configuration file of the first application by using an AUTOSAR configuration tool.

In some possible implementations, compiling the first OS object configuration code and the service code of the first application includes: compiling the first OS object configuration code and the service code of the first application by using a compiler.

In some possible implementations, linking the static library of the first application and the static library of the OS kernel includes: linking the static library of the first application and the static library of the OS kernel by using the compiler.

In some possible implementations, compiling the first OS object configuration code (for example, App1_os_cfg.c) and the service code of the first application (for example, App1.c) to obtain the static library of the first application (for example, App1.a) includes: compiling the first OS object configuration code to obtain third OS object configuration code (for example, App1_os_cfg.c.obj), and compiling the service code of the first application to obtain another service code (for example, App1.c.obj); and archiving the third OS object configuration code and the another service code to obtain the static library of the first application.

With reference to the first aspect, in some implementations of the first aspect, the method further includes: obtaining an OS object configuration file of a second application and service code of the second application; converting the OS object configuration file of the second application to obtain second OS object configuration code; and compiling the second OS object configuration code and the service code of the second application to obtain a static library of the second application. Linking the static library of the first application and the static library of the OS kernel to obtain the executable file includes: linking the static library of the first application, the static library of the second application, and the static library of the OS kernel to obtain the executable file.

Based on the foregoing technical solution, an OS may support a plurality of applications, and the plurality of applications may be provided by different vendors. The different vendors may release OS object configuration files used for configuration of the applications and service code in parallel. When generating the executable file, static libraries of different applications and the static library of the OS kernel need to be linked. In this way, the OS object configuration files provided by the plurality of vendors do not need to be combined. This helps improve efficiency of the developer and reduce the communication costs and the time costs in terms of the human resources during development.

With reference to the first aspect, in some implementations of the first aspect, the OS object configuration file of the first application includes a configuration file of a first OS object, the OS object configuration file of the second application includes a configuration file of a second OS object, and the first OS object initiates interaction with the second OS object. Converting the OS object configuration file of the first application to obtain the first OS object configuration code includes: configuring, in the OS object configuration file of the first application, a third OS object having a same name as the second OS object, and adding a first attribute to the third OS object, where the first attribute indicates that the third OS object is an extern object. Converting the OS object configuration file of the second application to obtain the second OS object configuration code includes: adding a second attribute to the second OS object in the OS object configuration file of the second application, where the second attribute indicates that the second OS object is an export object.

Based on the foregoing technical solution, when OS objects in different applications interact with each other, a user performs an operation on an OS object of a provider. An OS object with a same name may be configured on the user and an extern (extern) attribute is marked for the OS object, and the provider may mark an export (export) attribute for a corresponding OS object, so that interaction between the OS objects in the different applications can be implemented. In this way, interaction between OS objects does not need to be implemented by using a complex API parameter. This helps reduce development difficulty of the developer and also helps improve efficiency of the developer.

In some possible implementations, in a process of converting the OS object configuration file of the first application, a corresponding control block is not generated for the third OS object, and only the control block is referenced.

In some possible implementations, adding the first attribute to the third OS object includes: generating an extern (extern) declaration of a control block variable for the third OS object.

In some possible implementations, adding the second attribute to the second OS object includes: adding an export (export) attribute to the second OS object.

With reference to the first aspect, in some implementations of the first aspect, the OS object configuration file of the first application includes configuration files of one or more OS objects, and converting the OS object configuration file of the first application to obtain the first OS object configuration code includes: for each OS object in the one or more OS objects, generating a control block CB corresponding to the OS object; and adding a pointer of the CB corresponding to each OS object to a pointer array, where the pointer array forms a configuration variable of the first application. The method further includes: during OS boot, registering the configuration variable of the first application with the OS kernel.

Based on the foregoing technical solution, the OS may support the plurality of applications. Each application registers configuration information of an OS object of the application with the OS kernel by invoking an interface in an OS boot phase. Initialization of the OS object may be completed in the OS boot phase based on configuration information of the application.

In some possible implementations, the OS object configuration file of the first application includes configuration files of OS objects of a plurality of types (for example, tasks, events, and alarms), each type of OS object includes a plurality of OS objects of the type, pointers of each OS object of the type form pointer data of the OS object of the type, and pointer arrays of OS objects of different types form the configuration variable of the first application.

With reference to the first aspect, in some implementations of the first aspect, an identifier of each OS object is determined based on an identifier of the first application and an identifier of each OS object in the first application.

Based on the foregoing technical solution, the identifier of each OS object may be determined based on the identifier of the application and the identifier of each OS object in the application. In this way, configuration of the application may have a globally unique configuration name that forms a prefix of OS object namespace of the application, to avoid a code conflict with OS object configuration of another application.

According to a second aspect, this application provides a configuration apparatus. The apparatus includes: an obtaining unit, configured to obtain an operating system OS object configuration file of a first application and service code of the first application; a conversion unit, configured to convert the OS object configuration file of the first application to obtain first OS object configuration code; a compilation unit, configured to compile the first OS object configuration code and the service code of the first application to obtain a static library of the first application; and a linking unit, configured to link the static library of the first application and a static library of an OS kernel to obtain an executable file.

With reference to the second aspect, in some implementations of the second aspect, the obtaining unit is further configured to obtain an OS object configuration file of a second application and service code of the second application; the conversion unit is further configured to convert the OS object configuration file of the second application to obtain second OS object configuration code; the compilation unit is further configured to compile the second OS object configuration code and the service code of the second application to obtain a static library of the second application; and the linking unit is configured to link the static library of the first application, the static library of the second application, and the static library of the OS kernel to obtain the executable file.

With reference to the second aspect, in some implementations of the second aspect, the OS object configuration file of the first application includes a configuration file of a first OS object, the OS object configuration file of the second application includes a configuration file of a second OS object, and the first OS object initiates interaction with the second OS object; and the conversion unit is configured to: configure, in the OS object configuration file of the first application, a third OS object having a same name as the second OS object, and add a first attribute to the third OS object, where the first attribute indicates that the third OS object is an extern object; and add a second attribute to the second OS object in the OS object configuration file of the second application, where the second attribute indicates that the second OS object is an export object.

With reference to the second aspect, in some implementations of the second aspect, the OS object configuration file of the first application includes configuration files of one or more OS objects, and the apparatus further includes a registration unit; the conversion unit is configured to: for each OS object in the one or more OS objects, generate a control block CB corresponding to the OS object; and add a pointer of the CB corresponding to each OS object to a pointer array, where the pointer array forms a configuration variable of the first application; and the registration unit is configured to: during OS boot, register the configuration variable of the first application with the OS kernel.

With reference to the second aspect, in some implementations of the second aspect, an identifier of each OS object is determined based on an identifier of the first application and an identifier of each OS object in the first application.

According to a third aspect, this application provides a configuration apparatus. The apparatus includes: a memory, configured to store a computer program; and a processor, configured to execute the computer program stored in the memory, so that the apparatus performs the configuration method in any one of the possible implementations of the first aspect.

According to a fourth aspect, this application provides an electronic device. The electronic device includes the configuration apparatus in any one of the possible implementations of the second aspect or the third aspect.

According to a fifth aspect, this application provides a computer program product. The computer program product includes computer program code, and when the computer program code is run on a computer, the computer is enabled to perform the configuration method in any one of the possible implementations of the first aspect.

It should be noted that all or some of the computer program code may be stored in a first storage medium. The first storage medium may be encapsulated together with a processor, or may be encapsulated separately from a processor.

According to a sixth aspect, this application provides a computer-readable medium. The computer-readable medium stores instructions, and when the instructions are executed by a processor, the processor is enabled to implement the configuration method in any one of the possible implementations of the first aspect.

According to a seventh aspect, this application provides a chip. The chip includes a circuit, and the circuit is configured to perform the configuration method in any one of the possible implementations of the first aspect.

### BRIEF DESCRIPTION OF DRAWINGS

FIG. 1 is a diagram of a CP development process;
FIG. 2 is a diagram of a service component development procedure of an App1 according to an embodiment of this application;
FIG. 3 is a diagram of a pointer array of an OS object according to an embodiment of this application;
FIG. 4 is a diagram of development procedures of a plurality of components according to an embodiment of this application;
FIG. 5 is a diagram of interaction between a plurality of components according to an embodiment of this application;
FIG. 6A and FIG. 6B are a diagram in which pointer arrays of an App1 and an App2 are associated by using a declaration according to an embodiment of this application;
FIG. 7 is a schematic flowchart of a configuration method according to an embodiment of this application;
FIG. 8 is a block diagram of a configuration apparatus according to an embodiment of this application; and
FIG. 9 is a block diagram of a configuration apparatus according to an embodiment of this application.

### DESCRIPTION OF EMBODIMENTS

The following describes technical solutions in embodiments of this application with reference to accompanying drawings in embodiments of this application. In description in embodiments of this application, "/" means "or" unless otherwise specified. For example, A/B may represent A or B. In this specification, "and/or" describes only an association relationship between associated objects and represents that three relationships may exist. For example, A and/or B may represent the following three cases: Only A exists, both A and B exist, and only B exists.

Prefix words "first", "second", and the like in embodiments of this application are merely intended to distinguish between different described objects, and impose no limitation on locations, sequences, priorities, quantities, content, or the like of the described objects. Use of prefixes such as ordinal numbers used to distinguish the described objects in embodiments of this application does not constitute a limitation on the described objects. For descriptions of the described objects, refer to the context descriptions in claims or embodiments, and the use of such prefixes should not constitute a redundant limitation. In addition, in the descriptions of embodiments, unless otherwise specified, "a plurality of" means two or more.

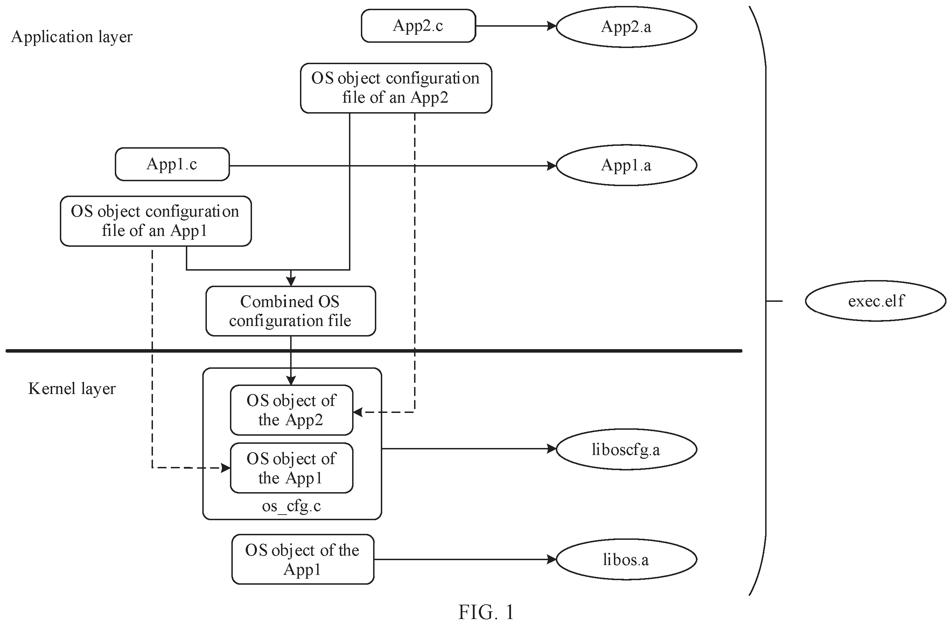

FIG. 1 is a diagram of a CP development process. In an original equipment manufacturer (original equipment manufacturer, OEM) software development mode, a scenario in which a plurality of vendors perform development is prevalent. For example, a vendor of an application (application, App) 1 needs to combine an OS object configuration file of the App1 and an OS object configuration file of an App2 that is provided by a vendor of the App2, to obtain a combined OS configuration file. OS dynamic configuration code os_cfg.c is generated in a kernel based on the combined OS configuration file, and then source code is compiled by using os_cfg.c to obtain liboscfg.a. liboscfg.a, App1.a obtained by compiling service code App1.c of the App1, App2.a obtained by compiling service code App2.c of the App2, and libos.a obtained by compiling an OS kernel file are linked to obtain an executable file exec.elf.

In the foregoing process, the plurality of vendors need to combine OS object configuration files for a plurality of times. An AUTOSAR configuration tool generates unified OS dynamic configuration code in the kernel based on a combined global OS configuration file, and compiles the source code at the same time. Because the plurality of vendors cannot perform development concurrently, a lot of human communication and time costs are brought.

Embodiments of this application provide a configuration method and apparatus, to resolve a problem that the plurality of vendors cannot perform development concurrently in the CP development process, thereby helping improve efficiency of a developer. This configuration method allows the plurality of vendors to perform development concurrently, and an OS kernel module and specific configuration of an OS object may be separated into independent components.

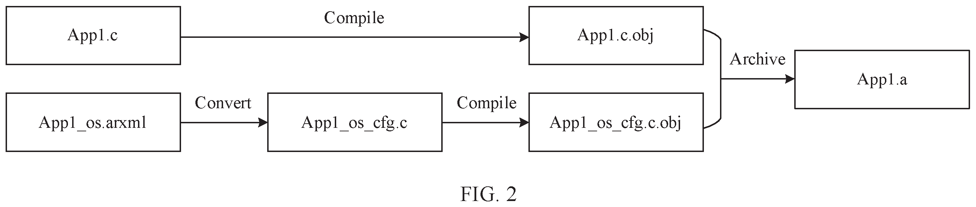

For example, FIG. 2 is a diagram of a service component development procedure of an App1 according to an embodiment of this application.

An OS object configuration file App1_os.arxml of the App1 and service code App1.c of the App1 may be combined into a service component of the App1. App1_os.arxml is an OS object configuration file used by the App1. An AUTOSAR configuration tool may read, graphically display, modify, and save App1_os.arxml, and convert App1_os.arxml into corresponding compilable configuration code like App1_os_cfg.c. App1_os_cfg.c.obj may be obtained by compiling the compilable configuration code App1_os_cfg.c by a compiler. The compiler may compile App1.c to obtain App1.c.obj. The compiler may archive App1_os_cfg.c.obj and App1.c.obj into a static library App1.a.

The foregoing process of converting App1_os.arxml into App1_os_cfg.c.obj may be referred to as a conversion process, and the conversion process may be implemented in the AUTOSAR configuration tool.

The foregoing processes of compiling App1_os_cfg.c to obtain App1_os_cfg.c.obj, compiling App1.c to obtain App1.c.obj, and archiving App1_os_cfg.c.obj and App1.c.obj to obtain App1.a may be implemented in the compiler.

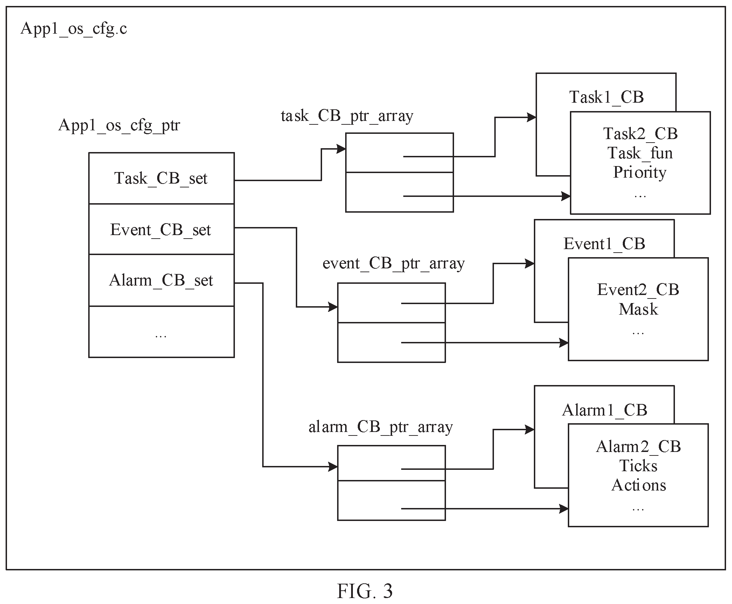

For example, FIG. 3 is a diagram of a pointer array of an OS object according to an embodiment of this application.

An AUTOSAR configuration tool may generate a corresponding control block (control block, CB) based on an OS object to which App1_os.arxml belongs. The control block is abbreviated as CB in code. Pointers of CBs of each type of OS objects form a pointer (pointer, PTR) array of the type of OS objects. Pointer arrays of various types of OS objects are stored in App1_os_cfg.c, for example, task control block pointer data (task_CB_ptr_array), event control block pointer data (event_CB_ptr_array), and alarm control block pointer data (alarm_CB_ptr_array). A global configuration variable App1_os_cfg_var is stored in App1_os_cfg.c, and App1_os_cfg_var combines pointer data of the various types of OS objects. A pointer App1_os_cfg_ptr in App1_os_cfg.c points to App1_os_cfg_var. App1_os_cfg_var is used when an application layer registers configuration information with a kernel layer. An App1 may use an ID of an OS object to perform an operation on App1_os_cfg_var. An ID of an OS object in each service component may include an ID of the service component and an ID of the OS object. The kernel layer may search for a corresponding control block based on the configuration ID of the service component and the ID of the OS object, and perform an operation on the control block. For example, the ID of the service component is the App1, and an ID of the OS object in the App1 is a task1. In this case, the ID of the final OS object may include 32 bits, where bits 0 to 23 may be used to store an ID of the App1, and bits 24 to 31 may be used to store an ID of the task1. Both the App1 and the task1 are converted into numbers. The ID of the OS object may be obtained by combining high-order bits of the App1 and low-order bits of the task1, for example, App1<<24+task1.

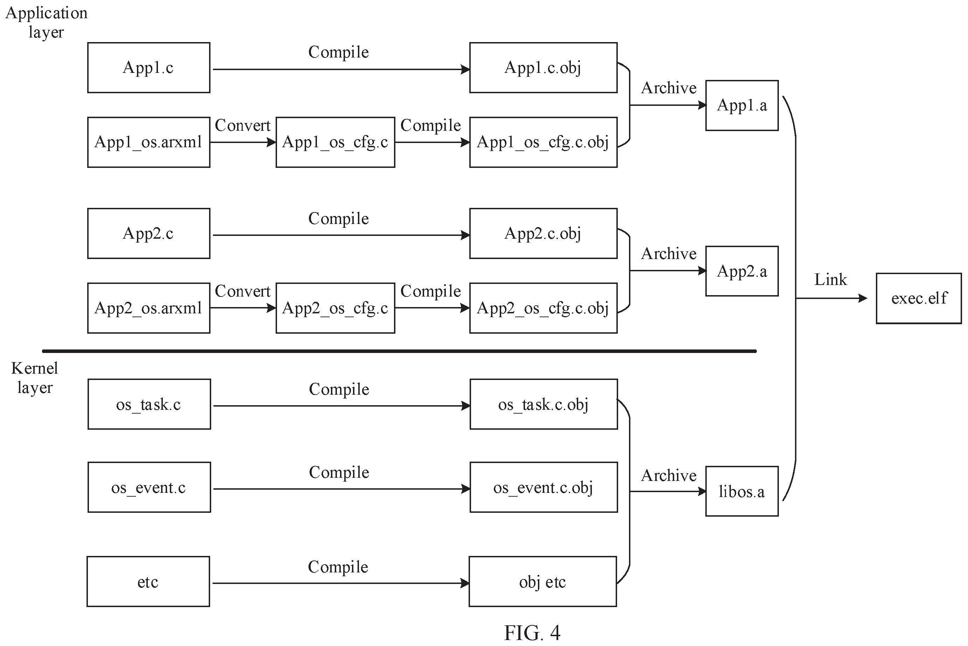

For example, FIG. 4 is a diagram of development procedures of a plurality of components according to an embodiment of this application. The plurality of components include an App1, an App2, and an OS kernel component. As shown in FIG. 4, the development procedures of the plurality of components include:
(1) A compiler generates an OS kernel static library libos.a.
   Service components of an OS kernel include os_task.c, os_event.c, and other code. The compiler may compile os_task.c to obtain os_task.c.obj, and compile os_event.c to obtain os_event.c.obj. The compiler may archive os_task.c.obj, os_event.c.obj, and the other code to obtain the OS kernel static library libos.a.
(2) The compiler may compile service code of the App1 and compilable configuration code that is obtained by converting an OS object configuration file of the App1 to obtain a static library App1.a.
   For the foregoing procedure (2), refer to the development procedure shown in FIG. 2. Details are not described herein again.
(3) The compiler may compile service code of the App2 and compilable configuration code that is obtained by converting an OS object configuration file of the App2 to obtain a static library App2.a.

For a development procedure of a service component of the App2, refer to a development procedure of a service component of the App1. Details are not described herein again. An AUTOSAR configuration tool may read, graphically display, modify, and save App2_os.arxml, convert App2_os.arxml into the corresponding compilable configuration code App2_os_cfg.c, and perform other operations. App2_os_cfg.c.obj may be obtained by compiling the compilable configuration code App2_os_cfg.c by the compiler. The compiler may compile App2.c to obtain App2.c.obj. The compiler may archive App2_os_cfg.c.obj and App2.c.obj into the static library App2.a.

App2_os_cfg.c may also include App2_os_cfg_ptr. App2_os_cfg_ptr points to App2_os_cfg_var, and App2_os_cfg_var is obtained by combining pointer data of various types of OS objects in the App2.

There is no actual sequence among the foregoing development procedures (1), (2), and (3).

The foregoing is described by using an example in which an application layer includes a service component corresponding to the App1 and a service component corresponding to the App2. Embodiments of this application are not limited thereto. For example, the application layer may further include more or fewer service components.

(4) The compiler may link App1.a, App2.a, and libos.a into an executable file exec.elf.

(5) In an OS boot phase, in a process of executing exec.elf, a boot phase is gone through, and a main() function is jumped into. The main() function may be used to perform OS registration configuration.

For example, the main() function is shown as follows:

```
         Void main(void)
         {
         OS_Configure(APP1, App1_os_cfg_ptr);
         OS_Configure(APP2, App2_os_cfg_ptr);
         StartOS();
         }
```

An array is reserved in the OS kernel to store App1_os_cfg_ptr and App2_os_cfg_ptr. The App1 and the App2 may separately register corresponding configuration information of the App1 and the App2 with an OS through an application programming interface (application programming interface, API).

Each service component may have its own OS object configuration file and is assigned with a unique configuration name. When two service components need to interact with each other, a provider of an OS object adds an export (export) attribute to the OS object in an OS object configuration file of the provider, to facilitate export of symbols corresponding to the OS object. A user of the OS object configures an OS object name with a same name in a configuration file of the user, and adds an extern (extern) attribute to the OS object. The OS object is not an object of the service component. When generating code, extern is used to modify a variable of the OS object. Static libraries of the service components and the OS kernel component may be linked together by using a same symbol.

The service component may register configuration information through the API of the OS to initialize system resources in the OS boot phase.

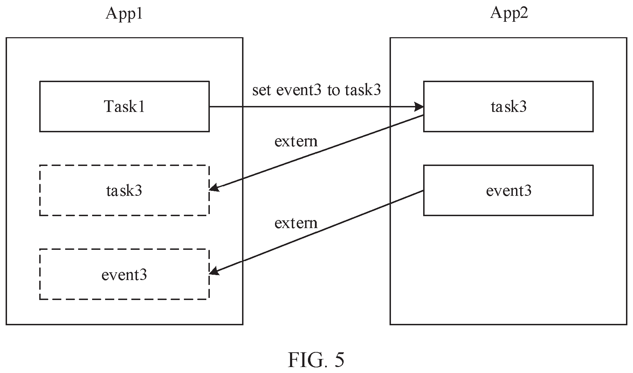

FIG. 5 is a diagram of interaction between a plurality of components according to an embodiment of this application. An example in which an application layer includes an App1 and an App2 is used. The App1 includes an OS object task_1, and the App2 includes OS objects task3 and event3.

The task_1 in the App1 needs to interact with the task_3 in the App2. The task_1 in the App1 sends an event to the task_3 in the App2 (set event3 to task3). In this case, the App1 may be used as a user, and the App2 may be used as a provider.

The App2 adds an export attribute to the task3 and the event3. In the App1, a task3 and an event3 with same names may be configured, and the task3 and the event3 are marked as extern objects from the App2.

In a configuration phase, the AUTOSAR configuration tool reads an OS object configuration file in a service component and generates compilable configuration code. Each OS object generates a corresponding control block, and the corresponding control block is added to a corresponding control block pointer array. An index (index) of the control block pointer array is an ID of the OS object. For an OS object with an extern attribute added, a corresponding control block may not be generated, and only an extern declaration of the control block is generated. As shown in FIG. 5, the task1 in the App1 generates a control block task1_CB, and populates a member of the control block task1_CB. The task3 in the App1 generates an extern declaration extern task3_CB of a control block. Control block addresses of the task1 and the task3 in the App1 are added to task_CB_ptr_array and used by the App1.

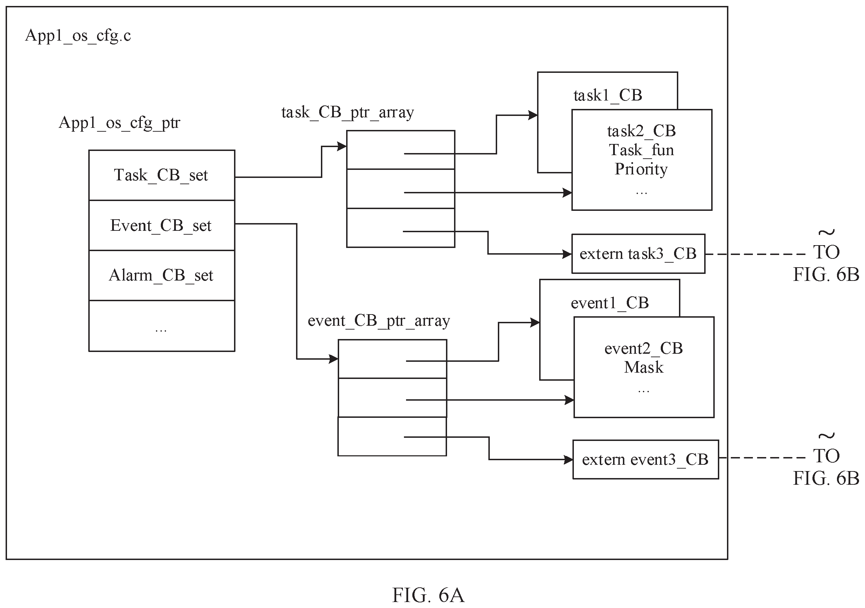

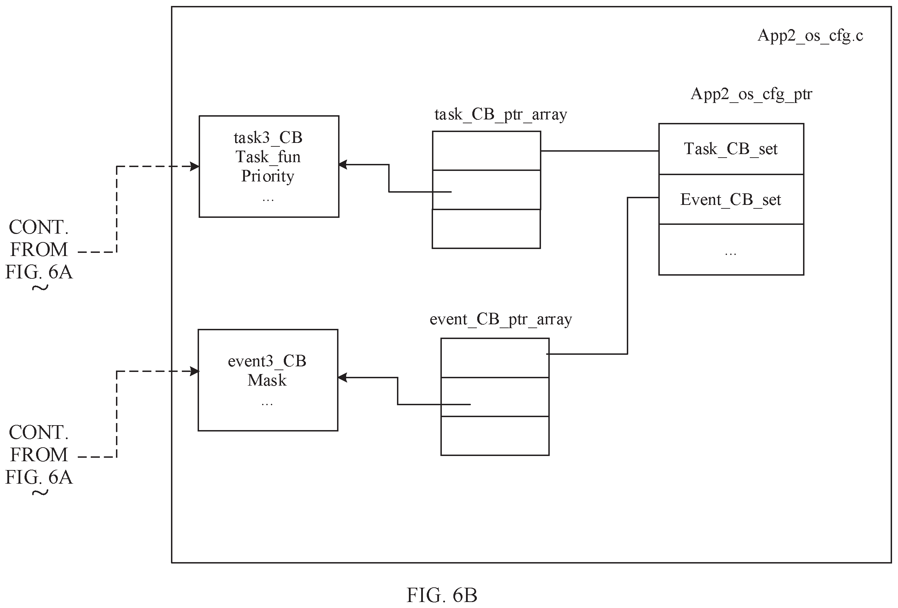

For example, FIG. 6A and FIG. 6B are a diagram in which pointer arrays of an App1 and an App2 are associated by using a declaration according to an embodiment of this application. It may be learned that an extern declaration extern task3_CB in the App1 is associated with task3_CB in the App2, and an extern declaration extern event3_CB in the App1 is associated with event3_CB in the App2.

Export and extern attributes may be used to implement interaction between a plurality of service components. The interaction between the plurality of service components does not need to be implemented by using an API parameter. This helps reduce learning and development difficulty of a developer.

After App1.a and App2.a are linked (or compiled and linked), corresponding variable names are converted to specific memory addresses. For example, in a compilation process, a CB variable task1_CB may be converted into a memory address (for example, 0x00001010).

In the non-AUTOSAR field, an embedded OS generally provides APIs for dynamically creating OS objects, and the OS objects may be created through the APIs. OS objects are created during running. Therefore, a quantity of OS objects in a system is uncertain. A memory management module needs to support dynamic memory application for storing the OS objects. In addition, a complex relationship between the OS objects also need to be implemented by inputting an API parameter. Compared with the AUTOSAR with a tool interface for configuration, this greatly improves learning and development difficulty of the developer. In addition, the memory management module is uncertain. A dynamic memory allocation (memory allocation, malloc) memory failure may cause a system exception, which conflicts with an AUTOSAR concept.

In this embodiment of this application, in a process of converting App1_os.arxml into App1_os_cfg.c, a static global variable CB may be generated for all the OS objects, and a memory may be pre-allocated to each CB. In a compilation phase in which static libraries are linked to an executable file, a location of the memory corresponding to each OS object may be determined.

In this way, the static global variable CB is generated by using the OS object, and the memory may be allocated to the CB in the compilation phase. This can resolve a problem of memory uncertainty.

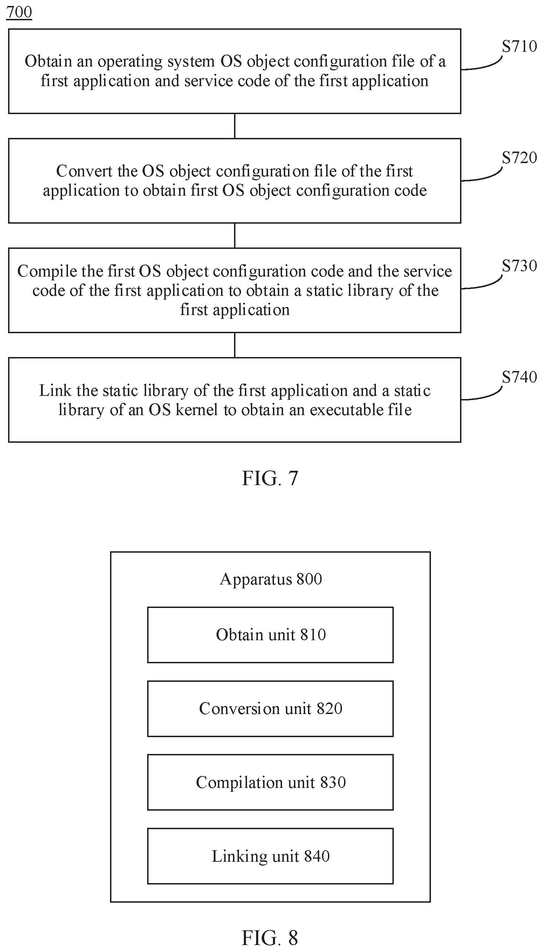

FIG. 7 is a schematic flowchart of a configuration method 700 according to an embodiment of this application. The method 700 may be performed by an electronic device, or the method 700 may be performed by a processor, a circuit, or a chip of an electronic device. The method 700 includes the following steps.

S710: Obtain an operating system OS object configuration file of a first application and service code of the first application.

For example, the OS object configuration file of the first application may be App1_os.arxml.

For example, the service code of the first application may be App1.c.

The OS object configuration file of the first application and the service code of the first application may be released by a vendor and obtained by a vehicle manufacturer. Different vendors may release OS object configuration files and service code of their applications in parallel. This resolves a problem of concurrent development of an AUTOSAR CP.

S720: Convert the OS object configuration file of the first application to obtain first OS object configuration code.

Optionally, converting the OS object configuration file of the first application to obtain the first OS object configuration code includes: reading, graphically displaying, modifying, and saving the OS object configuration file of the first application, and converting the OS object configuration file into the first OS object configuration code.

For example, the first OS object configuration code may be App1_os_cfg.c.

The foregoing process of converting the OS object configuration file may be implemented in an AUTOSAR configuration tool.

S730: Compile the first OS object configuration code and the service code of the first application to obtain a static library of the first application.

The static library of the first application may be App1.a.

Optionally, compiling the first OS object configuration code (for example, App1_os_cfg.c) and the service code of the first application (for example, App1.c) to obtain the static library of the first application (for example, App1.a) includes: compiling the first OS object configuration code to obtain third OS object configuration code (for example, App1_os_cfg.c.obj), and compiling the service code of the first application to obtain another service code (for example, App1.c.obj); and archiving the third OS object configuration code and the another service code to obtain the static library of the first application.

Compiling the first OS object configuration code and the service code of the first application includes: compiling the first OS object configuration code and the service code of the first application by using a compiler.

S740: Link the static library of the first application and a static library of an OS kernel to obtain an executable file.

For example, the executable file may be foregoing exec.elf.

Linking the static library of the first application and the static library of the OS kernel includes: linking the static library of the first application and the static library of the OS kernel by using the compiler.

Optionally, the method 700 further includes: obtaining an OS object configuration file of a second application and service code of the second application; converting the OS object configuration file of the second application to obtain second OS object configuration code; and compiling the second OS object configuration code and the service code of the second application to obtain a static library of the second application. Linking the static library of the first application and the static library of the OS kernel to obtain the executable file includes: linking the static library of the first application, the static library of the second application, and the static library of the OS kernel to obtain the executable file.

For example, the OS object configuration file of the second application may be App2_os.arxml.

For example, the service code of the second application may be App2.c.

For example, the second OS object configuration code may be App2_os_cfg.c.

Optionally, compiling the second OS object configuration code (for example, App2_os_cfg.c) and the service code of the second application (for example, App2.c) to obtain the static library of the second application (for example, App2.a) includes: compiling the second OS object configuration code to obtain fourth OS object configuration code (for example, App2_os_cfg.c.obj), and compiling the service code of the second application to obtain another service code (for example, App2.c.obj); and archiving the fourth OS object configuration code and the another service code to obtain the static library of the second application.

Optionally, the OS object configuration file of the first application includes a configuration file of a first OS object, the OS object configuration file of the second application includes a configuration file of a second OS object, and the first OS object initiates interaction with the second OS object. Converting the OS object configuration file of the first application to obtain the first OS object configuration code includes: configuring, in the OS object configuration file of the first application, a third OS object having a same name as the second OS object, and adding a first attribute to the third OS object, where the first attribute indicates that the third OS object is an extern object. Converting the OS object configuration file of the second application to obtain the second OS object configuration code includes: adding a second attribute to the second OS object in the OS object configuration file of the second application, where the second attribute indicates that the second OS object is an export object.

For example, the first application may be the App1 in FIG. 5, and the second application may be the App2 in FIG. 5. The first OS object may be the task1 in the App1, and the second OS object may be the task3 in the App2. The task_1 in the App1 needs to interact with the task_3 in the App2. The task_1 in the App1 sends an event (set an event3 to the task3) to the task_3 in the App2. In this case, the App1 may be used as a user, and the App2 may be used as a provider. The App2 adds an export attribute to the task3 and the event3. In the App1, a task3 and an event3 with same names may be configured, and the task3 and the event3 are marked as extern objects from the App2.

Optionally, the OS object configuration file of the first application includes configuration files of one or more OS objects, and converting the OS object configuration file of the first application to obtain the first OS object configuration code includes: for each OS object in the one or more OS objects, generating a control block CB corresponding to the OS object; and adding a pointer of the CB corresponding to each OS object to a pointer array, where the pointer array forms a configuration variable of the first application. The method 700 further includes: during OS boot, registering the configuration variable of the first application with the OS kernel.

For example, the configuration variable of the first application may be App1_os_cfg_var, and a pointer App1_os_cfg_ptr in App1_os_cfg.c points to App1_os_cfg_var.

For example, in an OS boot phase, in a process of executing exec.elf, a boot phase is gone through, and a main() function is jumped into. The main() function may be used to perform OS registration configuration. An array is reserved in the OS kernel to store App1_os_cfg_ptr and App2_os_cfg_ptr. The App1 and the App2 may separately register, with an OS through an API, configuration information corresponding to the App1 and the App2, where the configuration information includes information indicating a configuration variable.

Optionally, an identifier of each OS object is determined based on an identifier of the first application and an identifier of each OS object in the first application.

For example, an ID of a service component is the App1, an ID of an OS object is the task1, and the ID of the OS object may include 32 bits, where bits 0 to 23 may be used to store an ID of the App1, and bits 24 to 31 may be used to store an ID of the task1.

FIG. 8 is a block diagram of a configuration apparatus 800 according to an embodiment of this application. The apparatus 800 includes: an obtaining unit 810, configured to obtain an operating system OS object configuration file of a first application and service code of the first application; a conversion unit 820, configured to convert the OS object configuration file of the first application to obtain first OS object configuration code; a compilation unit 830, configured to compile the first OS object configuration code and the service code of the first application to obtain a static library of the first application; and a linking unit 840, configured to link the static library of the first application and a static library of an OS kernel to obtain an executable file.

Optionally, the obtaining unit 810 is further configured to obtain an OS object configuration file of a second application and service code of the second application; the conversion unit 820 is further configured to convert the OS object configuration file of the second application to obtain second OS object configuration code; the compilation unit 830 is further configured to compile the second OS object configuration code and the service code of the second application to obtain a static library of the second application; and the linking unit 840 is configured to link the static library of the first application, the static library of the second application, and the static library of the OS kernel to obtain the executable file.

Optionally, the OS object configuration file of the first application includes a configuration file of a first OS object, the OS object configuration file of the second application includes a configuration file of a second OS object, and the first OS object initiates interaction with the second OS object; and the conversion unit 820 is configured to: configure, in the OS object configuration file of the first application, a third OS object having a same name as the second OS object, and add a first attribute to the third OS object, where the first attribute indicates that the third OS object is an extern object; and add a second attribute to the second OS object in the OS object configuration file of the second application, where the second attribute indicates that the second OS object is an export object.

Optionally, the OS object configuration file of the first application includes configuration files of one or more OS objects, and the apparatus further includes a registration unit; the conversion unit 820 is configured to: for each OS object in the one or more OS objects, generate a control block CB corresponding to the OS object; and add a pointer of the CB corresponding to each OS object to a pointer array, where the pointer array forms a configuration variable of the first application; and the registration unit is configured to: during OS boot, register the configuration variable of the first application with the OS kernel.

Optionally, an identifier of each OS object is determined based on an identifier of the first application and an identifier of each OS object in the first application.

It should be understood that division into the units of the foregoing apparatus is merely logical function division. During actual implementation, all or some of the units may be integrated into one physical entity, or may be physically separated.

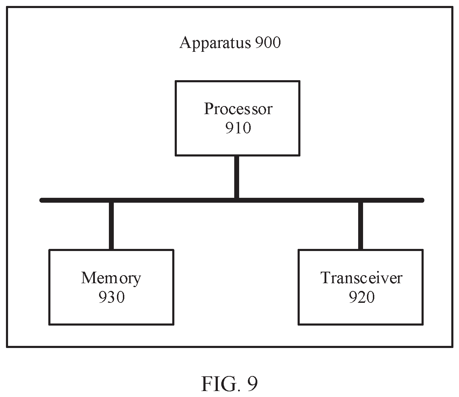

FIG. 9 is a block diagram of a configuration apparatus 900 according to an embodiment of this application. The configuration apparatus 900 shown in FIG. 9 may include a processor 910, a transceiver 920, and a memory 930. The processor 910, the transceiver 920, and the memory 930 are connected through an internal connection path. The memory 930 is configured to store instructions. The processor 910 is configured to execute the instructions stored in the memory 930, to enable the transceiver 920 to receive/send data. Optionally, the memory 930 may be coupled to the processor 910 through an interface, or may be integrated together with the processor 910.

It should be noted that the transceiver 920 may include but is not limited to a transceiver apparatus like an input/output interface (input/output interface), to implement communication between the apparatus 900 and another device or a communication network.

The memory 930 may be a read-only memory (read-only memory, ROM), a static storage device, a dynamic storage device, or a random access memory (random access memory, RAM).

In an implementation, the processor 910 may be a circuit having an instruction reading and running capability, for example, a central processing unit (central processing unit, CPU), a microprocessor, or a digital signal processor (digital signal processor, DSP). In another implementation, the processor 910 may implement a specific function by using a logical relationship of a hardware circuit, and the logical relationship of the hardware circuit is fixed or reconfigurable. For example, the processor 910 may be a hardware circuit implemented by an application-specific integrated circuit (application-specific integrated circuit, ASIC) or a programmable logic device (programmable logic device, PLD), for example, a field programmable gate array (field programmable gate array, FPGA). In a reconfigurable hardware circuit, a process in which the processor loads a configuration document to implement hardware circuit configuration may be understood as a process in which the processor loads instructions to implement functions of some or all of the units.

An embodiment of this application further provides an electronic device. The electronic device may include the foregoing configuration apparatus 800 or the foregoing configuration apparatus 900.

An embodiment of this application further provides a computer program product. The computer program product includes computer program code. When the computer program code is run on a computer, the computer is enabled to perform the method in the foregoing embodiment.

An embodiment of this application further provides a computer-readable medium. The computer-readable medium stores program code, and when the computer program code is run on a computer, the computer is enabled to perform the method in the foregoing embodiment.

An embodiment of this application further provides a chip, including a circuit, configured to perform the method in the foregoing embodiment.

In an implementation process, steps in the foregoing methods may be completed by using a hardware integrated logical circuit in the processor, or by using instructions in a form of software. The method disclosed with reference to embodiments of this application may be directly performed by a hardware processor, or may be performed by using a combination of hardware in the processor and a software module. The software module may be located in a mature storage medium in the art, like a random access memory, a flash memory, a read-only memory, a programmable read-only memory, an electrically erasable programmable memory, or a register. The storage medium is located in a memory, and a processor reads information in the memory and completes the steps in the foregoing method in combination with hardware of the processor. To avoid repetition, details are not described herein again.

It should be further understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

It may be clearly understood by a person skilled in the art that, for the purpose of convenient and brief description, for a detailed working process of the foregoing system, apparatus, and unit, refer to a corresponding process in the foregoing method embodiment. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to the current technology, or some of the technical solutions may be implemented in a form of a software product. The computer software product is stored in a storage medium, and includes several instructions for indicating a computing device (which may be a personal computer, a server, a network device, or the like) to perform all or some of the steps of the method described in embodiments of this application. The foregoing storage medium includes any medium that can store program code, for example, a USB flash drive, a removable hard disk, a ROM, a RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application.

## Claims

1. A configuration method, comprising:
obtaining an operating system OS object configuration file of a first application and service code of the first application;
converting the OS object configuration file of the first application to obtain first OS object configuration code;
compiling the first OS object configuration code and the service code of the first application to obtain a static library of the first application; and
linking the static library of the first application and a static library of an OS kernel to obtain an executable file.

2. The method according to claim 1, wherein the method further comprises:
obtaining an OS object configuration file of a second application and service code of the second application;
converting the OS object configuration file of the second application to obtain second OS object configuration code; and
compiling the second OS object configuration code and the service code of the second application to obtain a static library of the second application; and
linking the static library of the first application and the static library of the OS kernel to obtain the executable file comprises:
linking the static library of the first application, the static library of the second application, and the static library of the OS kernel to obtain the executable file.

3. The method according to claim 2, wherein the OS object configuration file of the first application comprises a configuration file of a first OS object, the OS object configuration file of the second application comprises a configuration file of a second OS object, and the first OS object initiates interaction with the second OS object;
converting the OS object configuration file of the first application to obtain the first OS object configuration code comprises:
configuring, in the OS object configuration file of the first application, a third OS object having a same name as the second OS object, and adding a first attribute to the third OS object, wherein the first attribute indicates that the third OS object is an extern object; and
converting the OS object configuration file of the second application to obtain the second OS object configuration code comprises:
adding a second attribute to the second OS object in the OS object configuration file of the second application, wherein the second attribute indicates that the second OS object is an export object.

4. The method according to any one of claims 1 to 3, wherein the OS object configuration file of the first application comprises configuration files of one or more OS objects, and converting the OS object configuration file of the first application to obtain the first OS object configuration code comprises:
for each OS object in the one or more OS objects, generating a control block CB corresponding to the OS object; and
adding a pointer of the CB corresponding to each OS object to a pointer array, wherein the pointer array forms a configuration variable of the first application; and
the method further comprises:
during OS boot, registering the configuration variable of the first application with the OS kernel.

5. The method according to claim 4, wherein an identifier of each OS object is determined based on an identifier of the first application and an identifier of each OS object in the first application.

6. A configuration apparatus, comprising:
an obtaining unit, configured to obtain an operating system OS object configuration file of a first application and service code of the first application;
a conversion unit, configured to convert the OS object configuration file of the first application to obtain first OS object configuration code;
a compilation unit, configured to compile the first OS object configuration code and the service code of the first application to obtain a static library of the first application; and
a linking unit, configured to link the static library of the first application and a static library of an OS kernel to obtain an executable file.

7. The apparatus according to claim 6, wherein
the obtaining unit is further configured to obtain an OS object configuration file of a second application and service code of the second application;
the conversion unit is further configured to convert the OS object configuration file of the second application to obtain second OS object configuration code;
the compilation unit is further configured to compile the second OS object configuration code and the service code of the second application to obtain a static library of the second application; and
the linking unit is configured to link the static library of the first application, the static library of the second application, and the static library of the OS kernel to obtain the executable file.

8. The apparatus according to claim 7, wherein the OS object configuration file of the first application comprises a configuration file of a first OS object, the OS object configuration file of the second application comprises a configuration file of a second OS object, and the first OS object initiates interaction with the second OS object; and
the conversion unit is configured to:
configure, in the OS object configuration file of the first application, a third OS object having a same name as the second OS object, and add a first attribute to the third OS object, wherein the first attribute indicates that the third OS object is an extern object; and
add a second attribute to the second OS object in the OS object configuration file of the second application, wherein the second attribute indicates that the second OS object is an export object.

9. The apparatus according to any one of claims 6 to 8, wherein the OS object configuration file of the first application comprises configuration files of one or more OS objects, and the apparatus further comprises a registration unit;
the conversion unit is configured to: for each OS object in the one or more OS objects, generate a control block CB corresponding to the OS object; and
add a pointer of the CB corresponding to each OS object to a pointer array, wherein the pointer array forms a configuration variable of the first application; and
the registration unit is configured to: during OS boot, register the configuration variable of the first application with the OS kernel.

10. The apparatus according to claim 9, wherein an identifier of each OS object is determined based on an identifier of the first application and an identifier of each OS object in the first application.

11. A configuration apparatus, comprising:
a memory, configured to store a computer program; and
a processor, configured to execute the computer program stored in the memory, so that the apparatus performs the configuration method according to any one of claims 1 to 5.

12. An electronic device, comprising the configuration apparatus according to any one of claims 6 to 11.

13. A computer-readable storage medium, wherein the computer-readable storage medium stores instructions, and when the instructions are executed by a processor, the processor is enabled to implement the configuration method according to any one of claims 1 to 5.

14. A chip, wherein the chip comprises a circuit, and the circuit is configured to perform the configuration method according to any one of claims 1 to 5.

15. A computer program product, wherein the computer program product comprises computer program code, and when the computer program code is run on a computer, the computer is enabled to perform the configuration method according to any one of claims 1 to 5.
